# EUROPEAN PATENT APPLICATION

(11) **EP 4 809 974 A1**
(43) Date of publication of application: **23.09.2026**
(21) Application number: 25382267.0
(22) Date of filing: 20.03.2025
(51) Int. Cl.: A61C 8/00

(54) **ANGLED ABUTMENT WITH DIRECT LUTING**

(71) Applicant: Tech Xika P.T.T, S.L., 25005 Lleida (ES)
(72) Inventor: Carrero Villarroel, Xavier, 25005 Lleida (ES); Sassi, Sebastian, 25005 Lleida (ES)
(74) Representative: Carlos Hernando, Borja

(57) **Abstract**

An angled abutment with direct luting, relating to a device used as a connection between an implant and a dental prosthesis and which main purpose is to solve problems associated with the height and angulation of the prosthesis fixed directly on the abutment. Preferably, the angled abutment is made of biocompatible material and, after installation, is solidly anchored to the dental implant.

## Description

### OBJECT OF THE INVENTION

The present invention, an angled abutment with direct luting, relates to a device used as a connection between an implant and a dental prosthesis and which main purpose is to solve problems associated with the height and angulation of the prosthesis fixed directly on the abutment. Preferably, the angled abutment is made of biocompatible material and, after installation, is solidly anchored to the dental implant.

The field of application is dentistry and, in particular, interface devices for fixing dental prostheses on dental implants, mounted on the upper and lower jaw, and on which the prosthesis, which may be a crown, is attached.

### BACKGROUND OF THE INVENTION

Currently, dental implantology techniques allow tooth roots to be replaced by dental implants made of biocompatible material, normally a titanium alloy, to which the corresponding prostheses or artificial dental pieces are attached.

In general, the phases of implanting said implants can be summarised as an initial phase of implant insertion, followed by a subsequent intermediate phase of osseointegration, which involves a waiting period, and the final phase of fixing the final prosthesis.

Prior to fixing said final prosthesis, a provisional prosthesis can be placed on the implant as close as possible to the final prosthesis, which will allow early implementation with or without a functional load, but achieving an immediate aesthetic function.

Currently, the available techniques allow said connection to be made by means of cement bonding or screw-retained cement, which results in cemented prostheses or screw-retained prostheses, which normally use standard prefabricated titanium abutments or prostheses that are custom-made by CAD-CAM methods.

Although surgical techniques in implant insertion and positioning have improved considerably today, there being previously adjusted guided surgical systems, with prior planning by CT-type radiographic methods, for positioning the implant in the bone, the final position of the implant will always depend on the bone structure resulting from the osseointegration process and on the insertion positions, from a position antagonist to the placed implant, to inclined positions of the implant, which usually range from 0° to 45°, the latter being the least favourable.

Of the prosthetic solutions, transepithelial abutments are one of the most valued products among their users. These abutments, which act as a connection between the implant and the dental prosthesis (complete prosthesis, crown or bridge), have different features and advantages that allow for improved precision and comfort in dental interventions, as well as avoid possible complications for the patient. Among the known techniques, the All-on-four technique stands out, which is an implant technique that solves full arch or jaw treatments with only 4 implants and with the placement of a fixed prosthesis of the entire arch or jaw on the same day of surgery. In this system, transepithelial abutments are usually used, combining angled and/or straight abutments based on the required adaptation of the anatomy to the prosthesis in order to resolve the cases that are detected. These transepithelial abutments require additional elements or components that are placed on the abutment itself, preferably by means of a thread, in order to then lute the dental prosthesis on the additional element or component.

The main objective of the present invention is to be able to lute the dental prosthesis directly on the angled abutment, without using additional intermediate components or elements such as transepithelial abutments, making it possible to correct the position of the dental implant closure with the dental prosthesis in an inclination between more than 0° and 45° with respect to the position of the axis of the implant.

### DESCRIPTION OF THE INVENTION

The present invention therefore relates to an angled abutment with direct luting, made of a biocompatible material and with a direct connection to an endosseous dental implant, especially designed for use in both prosthetic restoration and in single crowns.

Therefore, a first object of the present invention is an angled abutment according to claim 1. Said angled abutment comprises:
- a distal body with an outer surface on which a dental prosthesis or crown is arranged, a distal base and a proximal base both connected by an internal through hole,
- a proximal body, that can be connected to a dental implant, with a distal base and a proximal base connected by an inner housing, said distal base having a surface around the opening of the housing and the housing having a seat to receive a screw head, wherein a first proximal section of the recess of the proximal body extends along a first axis "a" and a second distal section of said recess extends along a second axis "b" which forms an angle with respect to said first axis "a" and is perpendicular to the distal base of said proximal body, and
- a screw inside the inner housing of the proximal body with the screw head located above the seat,
the outer surface of the distal body having a configuration suitable for direct luting of a dental prosthesis, with no intermediate components or elements between said outer surface and the dental prosthesis.

The abutment as per the invention may be placed in the upper arch or jaw or in the lower arch or jaw, and therefore, although reference is made in the description to distal body and proximal body, as well as to the ends or sections of these bodies, the proximal body is always the body directly screwed to the implant by means of the abutment screw, and the distal body is always the body to which the dental prosthesis is luted, regardless of whether the angled abutment as per the invention is arranged in the lower arch or jaw or in the upper arch or jaw of a patient.

The outer surface of said distal body is adapted and prepared to enable and facilitate direct luting of the dental prosthesis on it. Adaptation and preparation of the outer surface of the distal body can be accomplished by one or more of the following treatments:
- Mechanical treatments: for example, sandblasting, machining of retention grooves, micro-texturing, etc. to improve anchoring between the two components.
- Chemical treatments: for example, acid etching, silanisation or coatings that promote adhesion between components, among other treatments.

Moreover, the cement or adhesive to be used will depend on the materials of the distal body, for example, if the material is:
- Titanium or Cobalt-Chromium alloy, a resin cement or glass ionomer cement will preferably be used, preferably combined with a sandblasting treatment.
- Zirconium, a resin cement with silane will preferably be used.
- PEEK, a resin cement with special adhesive will preferably be used.

Furthermore, the material of the prosthesis is also important (which can be, for example, zirconium, metal or PMMA (polymethylmethacrylate), among others) and a cement adapted to the same must be chosen, such as, for example, resin, glass ionomer or a self-adhesive.

There are many types of cement that can be used, as well as others that will undoubtedly be developed in the future.

Thus, according to the foregoing, a strong and stable fixation of the prosthesis with the distal body will be achieved based on the correct preparation of the surfaces and a correct combination of materials and cement(s).

The distal body is solidly attached to the proximal body, so that the proximal base of the distal body is inserted and held in the opening of the housing of the proximal body by permanent fastening means, thus forming a single device where the screw remains captive between the two bodies, with movements of the screw inside the inner housing of the proximal body that are limited by the distal body.

According to the foregoing, the angled abutment as per the invention is made up of three components assembled in such a way that they form a single device.

Therefore, the angled abutment is made up of two bodies solidly joined together and a screw, captive inside the two previous bodies, as a third component of the angled abutment.

The dental prosthesis is directly luted on the distal body and the proximal body is fitted and fixed directly on the implant with the help of the captive screw which is part of the abutment as per the invention. After the abutment is assembled, i.e., after insertion of the captive screw into the proximal body and the coupling or connection of the distal body on the proximal body, the three components form one part, i.e., a single device. For this purpose, the connection or coupling of the distal body on the proximal body is carried out in such a way that it is permanent, i.e., the two bodies are solidly joined together, preventing them from separating.

The abutment as per the present invention is designed for use in the upper or lower jaw and in combination with endosseous implants it is suitable for single dental piece restorations.

Additional features of this transepithelial abutment include:
- The transepithelial abutment allows angulations with respect to the axis of the implant of more than 0° to 45°. For this purpose, the proximal body can have different configurations depending on the required angle of inclination. If, for example, the required angle of inclination is 45°, the proximal body has a recess which is not straight and which is determined by at least two axes, a first vertical axis "a", in the proximal part of the proximal body and coinciding with the axis of the dental implant when the abutment is connected to the implant, and a second axis "b", in the distal part of the distal body, angled with respect to the first axis "a" and perpendicular to the distal base of the proximal body. The angle between the first axis and the second axis determines the inclination of the abutment, and in particular the inclination of the distal body of the abutment. Depending on the required inclination, the proximal body will have one configuration or another, in other words, there will be as many proximal bodies as there are inclinations required.

According to the foregoing, a first proximal section of the recess of the proximal body extends along a first axis "a" and a second distal section of said recess extends along a second axis "b" which forms an angle with respect to said first axis "a", said second axis "b" being perpendicular to the distal base of said proximal body.

The proximal part of the proximal body has a complementary external configuration adapted to the coupling of the implant in which the angled abutment as per the invention is to be installed.
- The connection between the distal body and the proximal body is preferably formed by a thread between the two bodies followed by welding or bonding, although it could also be a friction fit between the two bodies with complementary geometries followed by welding or bonding.
- The distal body of the transepithelial abutment, in particular the outer surface thereof, has a configuration suitable for direct luting of a dental prosthesis on the same, without the need for additional elements or components to be arranged between the distal body and the dental prosthesis.

For this purpose, the distal body has a length that allows a dental prosthesis to be luted directly on said outer surface without the need for intermediate elements in between. Said length is preferably greater than 3 mm and more preferably greater than 3.5 mm. Preferably, said configuration of the outer surface includes protrusions that promote the connection between the dental prosthesis and the distal body of the abutment. Alternatively or additionally, the outer surface may have indentations to aid in such luting.

Preferably, the distal body comprises close to its distal base a configuration suitable for fastening by a tool that allows, or facilitates, the insertion, usually by threading, of the distal body into the proximal body.

This distal body preferably has an outer configuration of a body of revolution or approximate, preferably cylindrical, and the recess of the distal body also preferably has an approximately cylindrical configuration. In any case, other configurations may be possible, for example, prisms with square bases, prisms with hexagonal bases, etc.

One option is for the outer surface of the distal body to have a scannable area or surface, i.e., one that can be detected by a scanner, preferably consisting of a scannable surface, when the distal body has an approximately cylindrical configuration, to which a surface treatment is applied. When the distal body already has at least one flat surface derived from its configuration, one of these flat surfaces may also incorporate said scanning treatment.

The through hole of the distal body preferably does not incorporate any thread, i.e., it is approximately smooth; however, on certain occasions, it may be of interest for said through hole to have a thread, for example, to place a healing cap on the abutment or other accessory elements, although in no case is said thread used to receive an element or component that can be arranged between the distal body and the final dental prosthesis, i.e., an intermediate element or component that receives the luted central prosthesis.

A second object of the invention is an angled assembly according to claim 15. Specifically, said assembly comprises:
- an angled abutment according to the features described above,
- a dental prosthesis arranged directly, without intermediate elements, on the outer surface of the distal body of the angled abutment, and
- a cement or adhesive arranged between the outer surface of the distal body of the angled abutment and the dental prosthesis.

For said luting, a cement or adhesive is applied to the outside surface of the distal body or applied to the inside of the dental prosthesis, depending on the materials of the distal body and the dental prosthesis.

### BRIEF DESCRIPTION OF THE DRAWINGS

As a complement to the description provided herein, and for the purpose of helping to make the features of the invention more readily understandable, a set of drawings is included as part of this description, by way of illustration and not limitation.
Figure 1 shows a sectional view of an exemplary embodiment of the angled abutment as per the invention, made up of the three components joined together.
Figure 2 shows another sectional and perspective view of the previous example.
Figure 3 shows an unsectioned perspective view of the previous example.
Figure 4 shows an exploded view of the abutment of the invention.
Figures 5 and 6 show two perspective views of the invention.
Figure 7 shows a sectional view of the angled abutment as per the present invention placed on a dental implant.
Figure 8 shows a sectional view of the angled abutment with a dental prosthesis placed on a dental implant.
Figure 9 shows a sectional view of the angled abutment as per the present invention placed on a dental implant together with a screwdriver that allows the captive screw to be screwed onto said dental implant.
Figure 10 shows the angled abutment with a screwdriver, unsectioned, but with the implant sectioned.
Figure 11 shows the view of figure 9 with a dental prosthesis traversed by a screwdriver.
Figures 12 and 13 show two perspective views of the angled abutment with a screwdriver.
Figure 14 shows an angled abutment with a dental prosthesis (translucent) luted directly on the same, the anatomical dental prosthesis made of a biocompatible material, such as zirconium, and obtained by CAD-CAM methods being a sintered, re-machined or milled metal part.
Figure 15 shows a prior art solution with a straight abutment, which is screwed to an implant, with a metal part or interface screwed to said abutment and on which a dental prosthesis is luted.

### PREFERRED EMBODIMENT OF THE INVENTION

In accordance with the previous figures, a detailed description of different embodiments of the invention is provided below.

The figures show an angled abutment 1 according to the present invention that are formed by three parts or components which are a distal body 20, a proximal body 30 and a captive screw 40 between the two parts. Furthermore, the distal body 20 and the proximal body 30 are preferably joined by a thread between the two bodies.

After the two distal and proximal bodies are coupled, they are both permanently joined by welding (90) or an adhesive arranged between the two.

After the distal body 20 and the proximal body 30 are connected or coupled, the screw 40 is captive inside the assembly formed by the two bodies and the three components form a single device or abutment 1. Both the distal body 20 and the proximal body 30 are hollow and thus allow the screw 40 to be captive inside them, between the two bodies, mainly in the hollow inner housing of the proximal body 30, the distal body 20 preventing from the screw 40 from coming out. This configuration gives rise to the angled abutment 1 as per the present invention.

The figures also show how the proximal body 30 has a proximal geometry 33 that will depend on the type of dental implant 70 to which the abutment 1 is to be connected. The thread 42 of the screw 40 that is captive inside the proximal body 30 and limited in its movement by the distal body 20 protrudes proximally.

It can also be seen how the proximal body 30 has a surface concentric to the distal body 20 on its distal base 31. This distal base 31 also acts as a support base where the dental prosthesis 60 that is luted to the abutment 1 rests, said base 31 maintaining its geometry and the same width throughout its perimeter to ensure that said prosthesis 60 has a constant and balanced support that will result in a better seating of the prosthesis 60 on the abutment 1.

The proximal part 33 of the proximal body 30, located below the distal base 31, will also depend on the implant 70 to which the abutment 1 is to be coupled, since said proximal part 33 of the abutment 70 will be fixed to the maxillary or mandibular implant 70 as it is inserted into the same. Therefore, the design of this proximal body 30 will vary depending on the type of implant to be used, and the screw 40 will also depend on the type of implant 70. It can be seen how the screw 40 is captive inside the proximal body 30 respecting the recess 21 of the abutment arranged in the distal body 20.

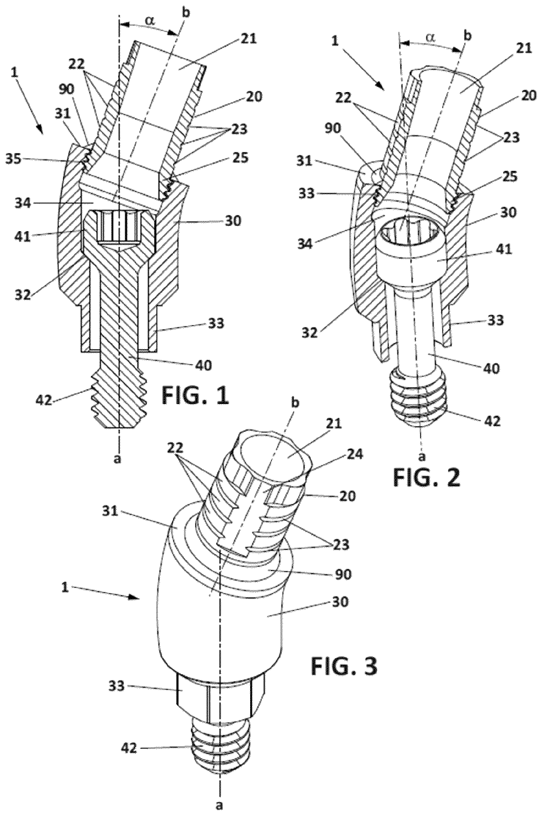

The angled abutment 1 allows angulations with respect to the axis of the implant of between more than 0° and 45°, depending mainly on the configuration of the proximal body 30, for which said proximal body 30 can have different configurations depending on the required angle of inclination. In the example shown in figures 1 and 2, wherein the distal body 20 has an inclination of approximately 30° with respect to a vertical axis "a", which coincides with the axis of the implant, the proximal body 30 has a recess which is not straight and which is determined by at least two axes, the first vertical axis "a", coinciding with the axis of the dental implant when the abutment 1 is connected to said implant, and a second axis "b", angled with respect to the first axis and perpendicular to the distal base 31 of the proximal body 30. The angle α between the first axis "a" and the second axis "b" determines the inclination of the abutment 1, and in particular the inclination of the distal body 20 of the abutment 1. Depending on the required inclination of the abutment 1, the proximal body 30 will have one configuration or another, in other words, there will be as many proximal bodies 30 as there are inclinations required, for which the inclination of the axis "b" with respect to the axis "a" will vary. The angle α between the two axes can vary between more than 0° and 45°.

Figures 1 and 2 show a cross-section of the angled abutment 1 with its three components:
- a distal body 20, with a distal base and a proximal base both connected by a through hole 21, preferably smooth, without showing any kind of thread,
- a proximal body 30, with a distal base 31 and a proximal base connected by an inner housing or recess 34, with a seat 32, said distal base 31 having a surface around the opening of the recess 34 and having a seat 32 inside the recess 34 to receive the seat of the head 41 of a screw 40 which thread 42 partially protrudes through the proximal base of the proximal body 30, and
- a captive screw 40 located inside the housing or recess 34 of the proximal body 30 with the head of the screw 40 located above the seat 32 to rest on the same. The thread 41 of the screw is likely to protrude through the proximal base 33 of the proximal body 30, although this will depend on the dimensions of the proximal body 30 and the recess 34 thereof, as well as the length of the screw 40.

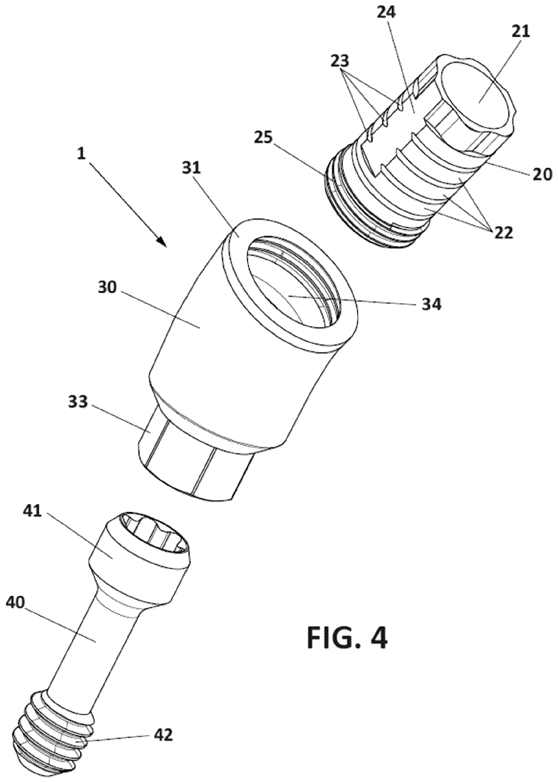

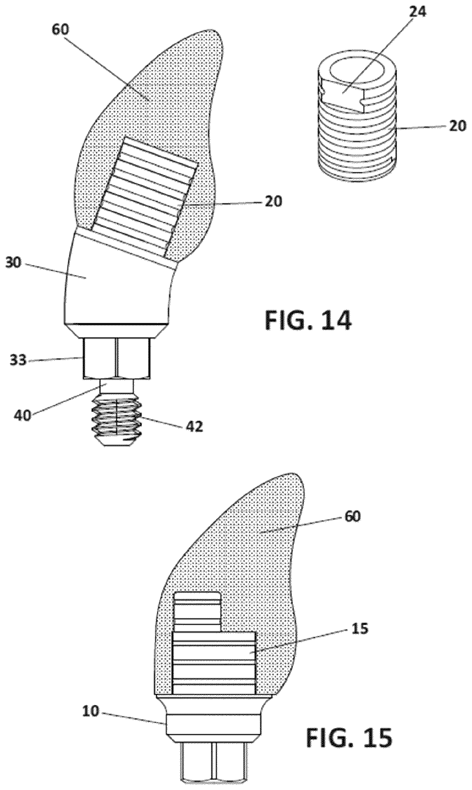

The proximal base of the distal body 20 is inserted into the housing or recess 34 of the proximal body 30 through the distal base 31 of the proximal body 30, in such a way that, by means of different alternative or complementary connecting means, the two bodies are solidly joined together and the screw 40 is captive between them, the seat of the head 41 of the screw 40 resting on the seat 32 in the recess 34 of the proximal body 30. Preferably, the distal body 20 and the proximal body 30 can be joined by threading, via a thread 25 located at the end of the connection of the distal body 20 with the proximal body 30 and a thread 35 arranged in the housing 34 of said proximal body 30, followed by welding (90) or bonding (figures 1, 2, 4, 7 to 11) or, in other alternative constructions (figure 14), by press-fit coupling followed by welding (90) or bonding.

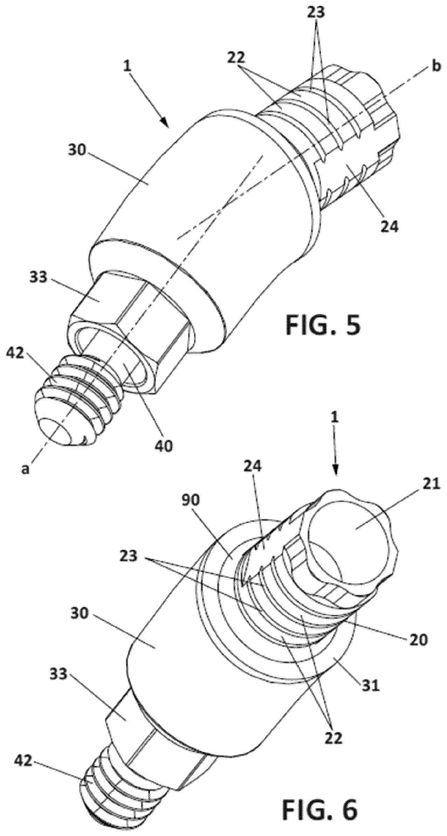

Figures 3, 5 and 6 show perspective views of the angled abutment 1 as per the invention.

In view of the foregoing, it can be seen that the distal body 20 does not depend on the proximal body 30, nor on the angulation of the latter, so that regardless of the angulation of the possible proximal bodies 30, the distal body 20 will preferably have the same configuration regardless of the angulation of the proximal body 30 to which it is coupled.

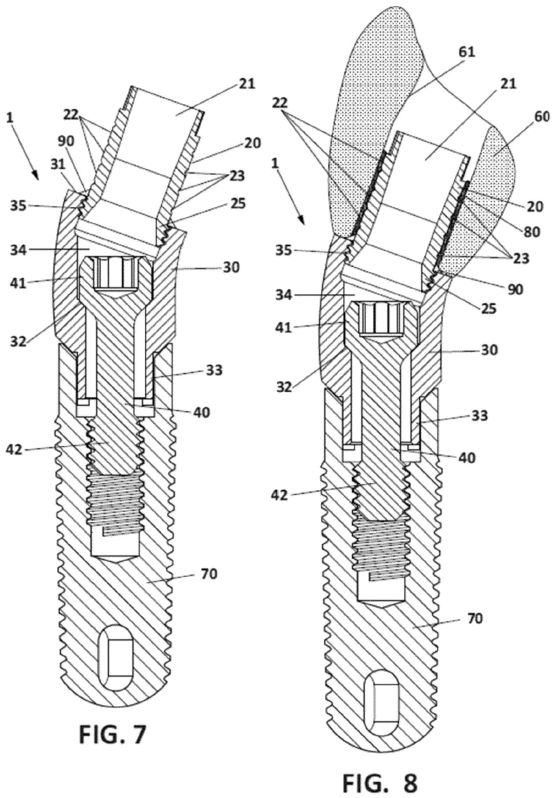

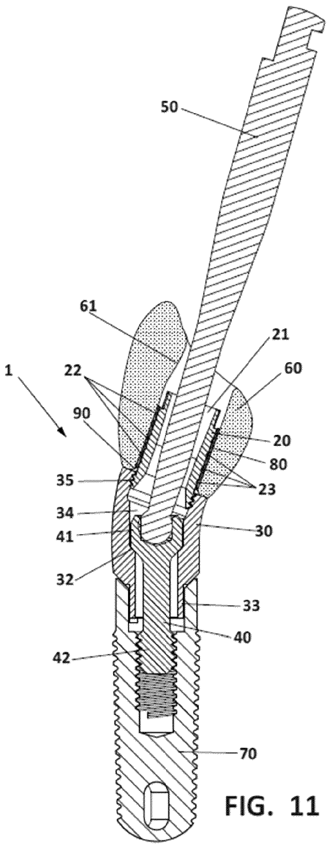

In particular, preferably, said distal body 20 is a tubular body with walls without lateral openings or windows, which allows the insertion of a screwdriver 50 (figures 8 to 11) to act on the captive screw 40 of the angled abutment 1 and enable its fastening to the dental implant 70. Said distal body 20 has a configuration suitable for luting a dental prosthesis 60 (figures 8, 11), so that the prosthesis 60 can be luted 80 directly on the outer surface of the distal body 20 without the need for intermediate elements or components as is the case in the solutions of the state of the art. To facilitate said luting 80, the outer surface of the distal body 20 may have different treatments and/or configurations, from roughness to grooves 23 and/or protrusions 22 that contribute to the connection or luting 80 between the dental prosthesis 60 and the distal body 20. The prosthesis 60 preferably rests on the distal base 31 of the proximal body 30.

Said distal body 20 may also have at least one flat portion 24 on its outer surface, which may or may not run along the entire length of the distal body 30, the purpose of which is to allow said distal body 20 to act not only as an abutment for luting the dental prosthesis 60 but also as a scanbody or scanning abutment. Also, or alternatively, a portion of the outer surface of said distal body 20 may have a surface treatment to act as a scanning abutment. An alternative scannable surface may be a projection on the outer surface of the distal body.

The tubular configuration of the distal body 20 preferably corresponds to approximately a body of revolution and preferably an externally approximately cylindrical body. The inner recess 21 of the distal body 20 is also approximately cylindrical. Said inner recess 21 is preferably smooth, without any thread, although it may have an inner thread for fastening accessory elements to the distal body 20, such as a cap. Said inner thread is in no case suitable for fastening elements or components on which a dental prosthesis is luted.

The length of the distal body is at least 3 mm, and preferably greater than 3.5 mm, to ensure proper luting 80 of the dental prosthesis on the distal body 20.

Also, close to the distal base of the distal body 20, said body may comprise means or a configuration suitable for fastening by a tool that facilitates the initial fastening, prior to welding (90), of the distal body 20 to the proximal body 30, and that facilitates, if necessary, the screwing of the distal body 20 into the proximal body 30.

Figures 14 and 15 show, respectively, an inclined abutment 1 as per the present invention, with a dental prosthesis 60, and a straight abutment 10 with a straight interface, known in the state of the art, with a side opening 15 also with a dental prosthesis 60. By means of the angled abutment of the present invention, better integration and luting 80 between the dental prosthesis and the distal body of the abutment is achieved, maintaining a more constant section, mainly in the visible area and therefore being more aesthetic.

The angled abutment of the present invention makes it possible to act on the dental prosthesis 60 luted 80 directly on the distal body 20 via a through conduit 61 (figures 8 and 11) in the dental prosthesis 60, making it possible for the entry opening of the screwdriver 50 in the through conduit 61 to be made through an area of the prosthesis that is not visible from the outside of the mouth, maintaining the aesthetics of said prosthesis. Conversely, the use of a solution such as that shown in figure 15 may mean that the entry hole in the conduit through the prosthesis 60 is located on the part of the prosthesis that is visible from the outside of the patient's mouth.

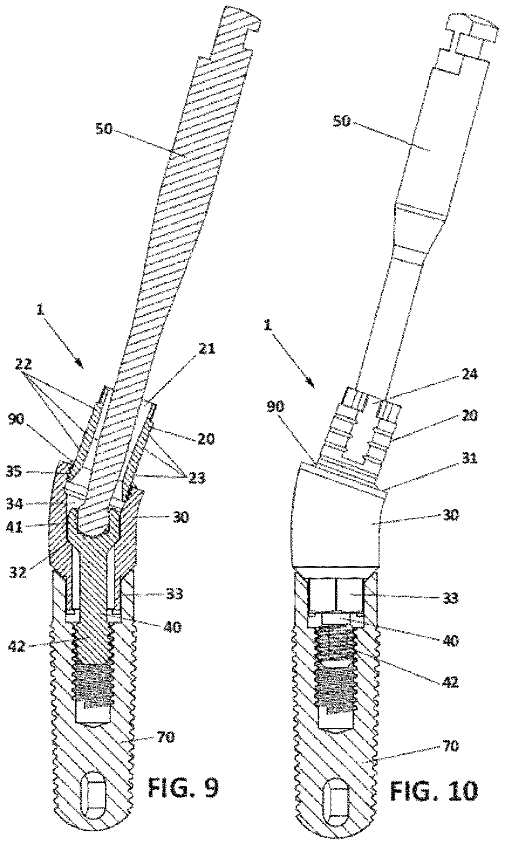

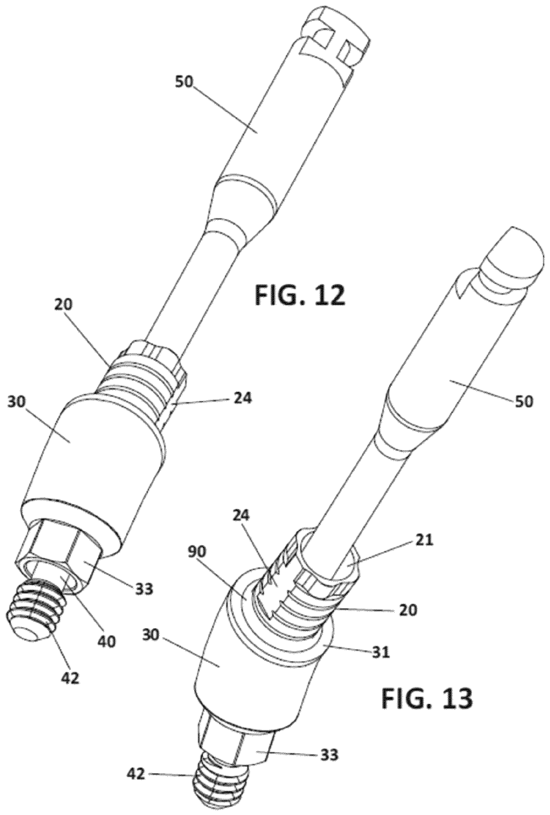

Figures 9 to 13 show an angled abutment 1 as per the invention with a screwdriver 50 acting on the captive screw 40 for fastening to the dental implant 70. In particular, Figures 9 to 11 show a section of an angled abutment 1 connected on a dental implant 70 with the aid of the screwdriver 50 in charge of screwing the screw 40 into the inner thread of the implant 70. To connect the abutment 1 to the implant, the proximal part of the proximal body 30 is placed inside the implant 70, matching the configuration of the outer proximal end 33 of the proximal body 30, the geometry of which depends on the type of implant, and then the thread 42 of the screw 40 is screwed into the thread inside the implant 70. The head 41 of the screw 40 is accessed through the recess 21 of the distal body 20 which is traversed by the screwdriver 50. A dental prosthesis 60, which rests on the distal or support base 31 of the proximal body 30, is directly arranged on the distal body 20 by luting 80 and surrounds said distal body 20. Said support 31, where the dental structure 60 rests, maintains its geometry by maintaining the same surface all around its perimeter. This allows it to have a greater support for future structures and complementary components that are installed on the abutment, improving the biological seal and the distribution of the different masticatory loads of the dental structure arranged on the abutment and towards the implant.

The angle α of the inclination of the angled abutment can vary between more than 0° and 45° depending on the needs, so that there will be an angled abutment for each required inclination, in other words, for example, an angled abutment with 25° where the angle α between the axis "a" and the axis "b" is 25°, an angled abutment with 15° where the angle α between the axis "a" and the axis "b" is 15°, or an angled abutment with 40° where the angle α between the axis "a" and the axis "b" is 40°. There will be as many abutments, and more specifically as many proximal bodies 30, as there are angulations required.

In order to fasten the screw 40 of the inclined abutment to the implant 70 in cases where the proximal body 30 has an angulation between both axes "a" and "b", it will be necessary to use a screwdriver that acts on the screw with said inclination.

Figure 14 shows an angled assembly comprising an angled abutment 1 as described above, with a dental prosthesis 60 luted 80 directly, without intermediate elements, on the outer surface of the distal body 20 of the angled abutment 1.

## Claims

1. An angled abutment for connecting a dental prosthesis to a dental implant, comprising:
- a distal body with an outer surface for receiving a dental prosthesis or crown, a distal base and a proximal base both connected by an internal through hole,
- a proximal body, that can be connected to a dental implant, with a distal base and a proximal base connected by an inner recess, said distal base having a surface around the opening of the recess and the housing having a seat to receive a screw head, wherein a first proximal section of the recess of the proximal body extends along a first axis "a" and a second distal section of said recess extends along a second axis "b" which forms an angle α with respect to said first axis "a" and is perpendicular to the distal base of said proximal body,
- a screw inside the inner housing of the proximal body with the screw head located above the seat, and
- the distal body being solidly attached to the proximal body, with the proximal base of the distal body inserted and held in the opening of the housing of the proximal body with permanent fastening means, thus forming a single device where the screw remains captive between the two bodies, with movements of the screw inside the inner housing of the proximal body that are limited by the distal body,
**characterised in that** the outer surface of the distal body has a configuration suitable for direct luting of a dental prosthesis, with no intermediate components or elements between said outer surface and the dental prosthesis.

2. The abutment according to claim 1, **characterised in that** the distal body has a length that allows a dental prosthesis to be luted directly on the outer surface.

3. The abutment according to claim 2, **characterised in that** the configuration of the outer surface has protrusions for luting a dental prosthesis.

4. The abutment according to any of the preceding claims, **characterised in that** the configuration of the outer surface has indentations for luting a dental prosthesis.

5. The abutment according to any of the preceding claims, **characterised in that** the distal body comprises a scannable area bounded by a surface treatment of the outer surface of said body.

6. The abutment according to any of the preceding claims, **characterised in that** the proximal part of the proximal body has an external configuration complementary to the coupling of the implant on which it is to be installed.

7. The abutment according to any of the preceding claims, **characterised in that** the angle α between the first and second axes can be between more than 0° and 45°.

8. The abutment according to any of the preceding claims, **characterised in that** the distal body comprises close to its distal base a configuration suitable for fastening by a tool.

9. The abutment according to any of the preceding claims, **characterised in that** the distal body is approximately a body of revolution.

10. The abutment according to any of the preceding claims, **characterised in that** the recess of the distal body is approximately cylindrical.

11. The abutment according to any of the preceding claims, **characterised in that** the distal body is externally approximately cylindrical.

12. The abutment according to any of the preceding claims, **characterised in that** the through hole of the distal body is smooth and without any thread.

13. The abutment according to any of claims 1 to 12, **characterised in that** the through hole comprises a thread for connecting other elements to the abutment which are not suitable for receiving a dental prosthesis.

14. The abutment according to claim 2, **characterised in that** the length of the distal body is greater than 3 mm.

15. An angled assembly **characterised in that** it comprises:
- an angled abutment according to any of claims 1 to 14,
- a dental prosthesis arranged directly, without intermediate elements, on the outer surface of the distal body of the angled abutment, and
- a cement or adhesive arranged between the abutment and the dental prosthesis.
